# FASCICULE DE BREVET EUROPEEN

(11) **EP 1 584 093 B1**
(45) Date de publication et mention de la délivrance du brevet: **18.12.2013**
(21) Numéro de dépôt: 04701980.7
(22) Date de dépôt: 14.01.2004
(51) Int. Cl.: G21K 1/06

(54) **SYSTEME DEFORMABLE COMPORTANT UNE PIECE DE FORME PARALLELEPIPEDIQUE ET UN ACTIONNEUR.**
VERFORMBARE VORRICHTUNG MIT EINEM QUADERFÖRMIGEN STÜCK UND EINEM AKTUATOR
DEFORMABLE SYSTEM COMPRISING A PARALLELEPIPED-SHAPED PART AND AN ACTUATOR.

(30) Priorité: 17.01.2003 FR 0300513
(43) Date de publication de la demande: 12.10.2005
(73) Titulaire: Thales SESO, 13090 Aix en Provence (FR)
(72) Inventeur: FERME, Jean-Jacques, F-13880 Velaux (FR); CARRE, Jean-François, F-84120 Pertuis (FR)
(74) Mandataire: Reboussin, Yohann Mickaël Noël
(86) Numéro de dépôt international: PCT/FR2004/000056
(87) Numéro de publication internationale: WO 2004/072986

(56) Documents cités:
- EP-A- 1 016 890
- FR-A- 2 703 777
- GB-A- 972 992
- US-A- 5 887 048

## Description

La présente invention a pour objet un système déformable comportant une pièce de forme parallélépipédique couplée à un actionneur permettant de la déformer pour générer une courbure suivant la longueur de la pièce.

On connaît déjà des miroirs utilisés autour de synchrotrons et dans lequel la variation de courbure permet de modifier la focalisation d'un faisceau de rayons X.

La présente invention concerne un système permettant de déformer une telle pièce, en utilisant la pièce par exemple un miroir comme structure de maintien. A cet effet, la pièce, au lieu d'être parallélépipédique, est plus complexe, car elle comporte à ses extrémités des excroissances permettant de transmettre à la pièce des efforts de déformation.

Des systèmes connus sont décrits dans les Demandes de Brevet FR 2 703 777 et EP 1 016 890.

L'invention concerne ainsi un système déformable comportant une pièce de forme parallélépipédique telle qu'une poutre couplée à un actionneur permettant de la déformer en générant une courbure suivant la longueur, tel que défini dans la revendication 1.

Le dispositif peut être caractérisé en ce que chaque levier présente au moins un appui constitué par au moins une pièce plane rigide en appui sur une excroissance, ladite pièce plane coopérant avec au moins une bille transmettant l'effort à appliquer.

Au moins une dite bille peut être centrée par des lames ressort réparties sur son pourtour.

Le premier et/ou le deuxième appui peuvent comporter deux dites pièces planes rigides. Le premier et/ou le deuxième appui peut alors présenter une rotule venant coiffer lesdites deux pièces planes rigides.

D'autres caractéristiques et avantages de l'invention apparaîtront à la lecture de la description ci-après, en liaison avec les dessins annexés, dans lesquels :
- la figure 1 illustre le principe à la base de l'invention,
- la figure 2 est une vue latérale d'un dispositif selon l'invention,
- les figures 3a et 3b illustrent en vue de dessous avec coupe partielle respectivement AA et BB la mise en oeuvre respectivement d'un appui intérieur et d'un appui extérieur,
- les figures 4a et 4b sont des vues agrandies des extrémités longitudinales du dispositif de la figure 2, la figure 4c est une vue agrandie de la partie centrale de la figure 2, alors que la figure 4d est une vue de bout de la figure 2.
- la figure 5 représente un mode de réalisation préféré d'un dispositif de centrage d'une bille,
- et les figures 6, 7a, 7b et 8 sont des variantes de mise en oeuvre de l'invention.

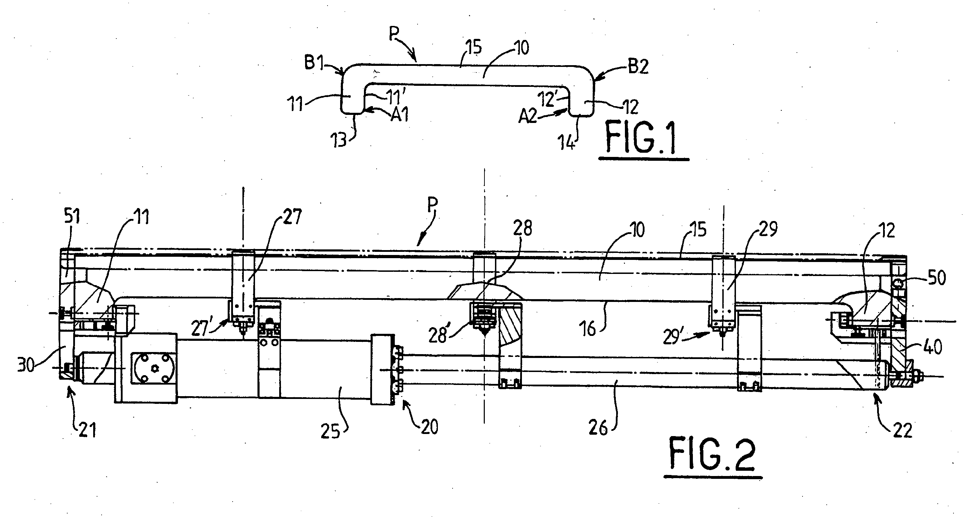

La pièce P à déformer, représentée à la figure 1 présente une partie centrale 10 de contour parallélépipédique à déformer s'étendant entre deux surfaces principales en général planes 15 et 16 et deux prolongements 11 et 12 à ses extrémités, ces prolongements 11 et 12 s'étendant de préférence perpendiculairement au plan de la partie centrale 10. Ces prolongements ou excroissances 11 et 12 confèrent à la pièce vue en coupe une forme de U allongé. Ces excroissances sont relativement massives de manière à ce qu'elles ne se déforment que de manière négligeable lorsqu'une force leur est appliquée pour déformer la région centrale 10.

La pièce P, notamment un miroir est de préférence usinée dans un même bloc de matière par exemple en Si, SiO₂, SiC, en « Zéro dur » (Marque Déposée de SCHOTT), en ULE (Marque Déposée de CORNING) ou en tout matériau de type verre ou cristal.

La déformation de la pièce P est obtenue par des leviers qui agissent sur les excroissances 11 et 12 sur des points d'appui A1 et B1 pour l'excroissance 11 et sur les points d'appui A2 et B2 pour l'excroissance 12 (figure 1). Les appuis A1 et A2 sont positionnés dans la partie intérieure 11' et 12' des excroissances 11 et 12 et de préférence au voisinage immédiat de leur extrémité libre 13 et 14. Les appuis B1 et B2 sont disposés à l'extérieur de la pièce P, avantageusement dans le prolongement de la partie centrale 10, et de préférence le plus près possible de la face 15 de la pièce P opposée aux excroissances 11 et 12.

Pour courber la partie principale 10 de la pièce P, on transmet donc des efforts de type moment aux deux extrémités de la pièce. A cet effet, il convient de fixer un levier à chaque extrémité. Une poussée sur ces leviers est exercée par un actuateur 20 tel qu'un vérin (figure 2) qui présente un corps 25 et une tige 26.

Le montage décrit ci-après permet de disposer les deux leviers sur la pièce P. Une des particularités de ce montage est la possibilité de transmettre à la matière du parallélépipède 10, qui est en général cassante quand il s'agit d'un miroir, des efforts importants par une bonne maîtrise des pressions aux points d'application de ces efforts, et sans recourir à des usinages très précis.

De plus, les mouvements induits par les variations de température sont autorisés sans glissement ni augmentation d'efforts (ce qui est important lorsqu'il est impossible de graisser un mécanisme à cause des conditions dans lesquelles il travaille) par le fait que :
a) les appuis sur le parallélépipède sont constitués de pastilles planes 1, en métal dur, qui reçoivent l'effort par l'intermédiaire de billes 5 s'appuyant au centre des pastilles 1 dont elles répartissent la pression,
b) des lames ressorts cylindriques 7 réparties autour des billes gardent centrées les billes 5 sur les pastilles planes 1 en autorisant les petits déplacements parallèles au plan d'appui.

Le montage des appuis fixes, par l'intermédiaire des lames ressort 7 leur permet de rotuler tout en maintenant une force d'appui homogène de manière à transmettre les pressions et les efforts de l'actuateur 20 et à les répartir sur les zones d'appui.

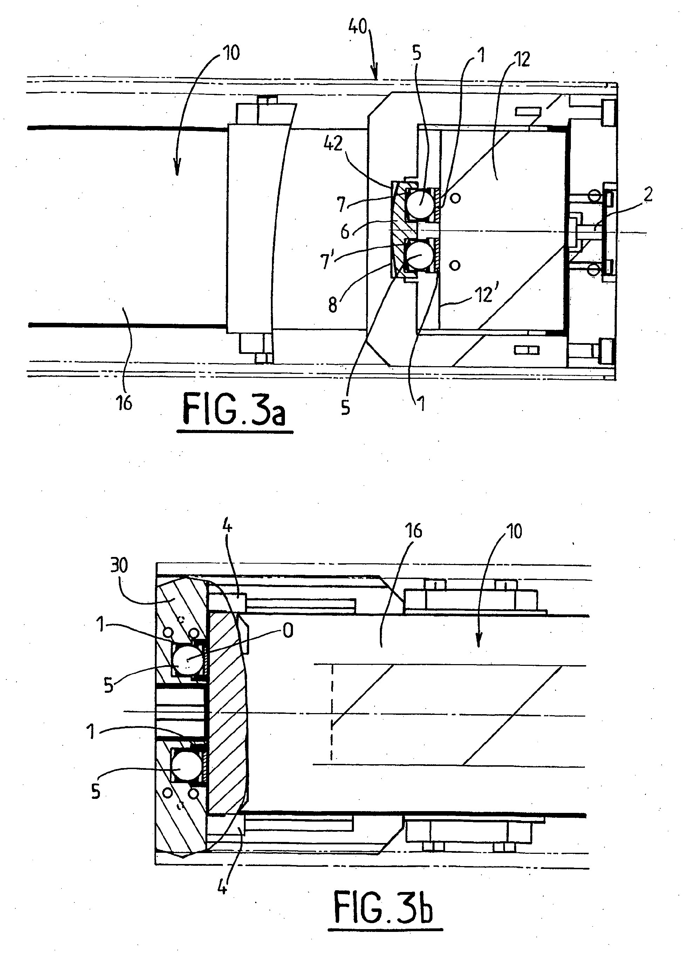

On utilise de préférence une paire de systèmes à bille 1,5 pour chaque appui A1, A2, B1 et B2. La disposition en est représentée dans les vues en coupe des figures 3a et 3b.

En outre, pour les appuis internes A1 et A2 (voir figure 3a), il est avantageux d'utiliser une pièce supplémentaire 6 qui coiffe les deux billes 5 grâce à des logements 7 et 7' et qui présente une région de contour sphérique 8 qui lui permet de rotuler en coopération avec une face plane 32 du levier 30. Cette rotule supplémentaire 6, travaillant comme un palonnier, permet de répartir uniformément les pressions entre les deux points d'appuis procurés par les deux billes 5 et donc d'obtenir une déformation bien répartie sur la largeur de la région principale à courber 10. On comprendra que les autres appuis B1 et B2 qui ne produisent pas de déformation des prolongements 11 et 12, mais ont surtout pour fonction de servir de référence au levier par exemple aux extrémités de la région 10 (notamment au niveau de la fibre neutre de cette région), peuvent être mis en oeuvre sans rotule 6.

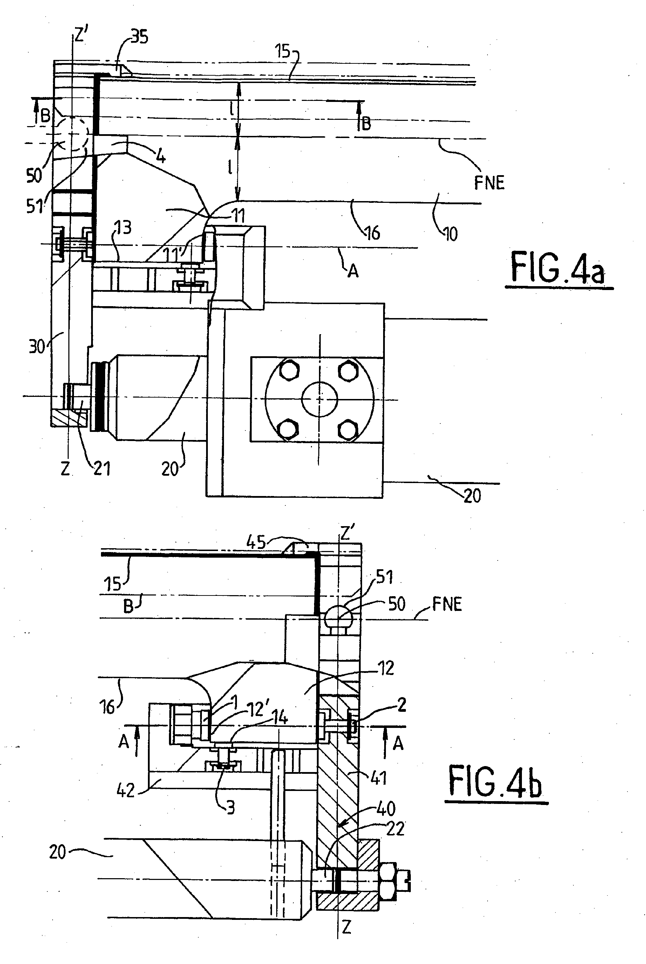

Le mouvement latéral de la pièce 10 par rapport aux leviers 30 et 40 est bloqué par deux pièces 4 qui s'étendent depuis le levier 30 parallèlement à la direction longitudinale de la pièce P et qui sont en appui simple sur les bords latéraux de la région 10 (voir figures 3b et 4a).

Chacun des leviers 30 et 40 comporte un bras principal (31, 41) qui longe une extrémité longitudinale plane de la pièce P et qui porte les appuis extérieurs B1 et B2 et une platine (41, 42) qui porte les appuis intérieurs A1 et A2.

Les leviers sont maintenus plaqués contre la pièce P d'une part par le ressort 2 solidaire de la platine 41 qui maintient en appui le levier 40 sur les pièces 1 (figure 3a) et par le ressort 3 solidaire de la platine 42 du levier 40 et qui le maintient en appui par une patte d'extrémité 45 (et/ou 35) du bras 41 (et/ou 31).

L'actionneur 20 qui est encastré en 21 et 22 entre les deux leviers 30 et 40 agit en tant qu'écarteur des deux leviers 30 et 40, et on voit que l'ensemble est bien référencé dans les trois dimensions.

De façon à minimiser les déformations de la pièce P lorsque l'on veut supporter l'ensemble constitué par la pièce P, l'actionneur 20 et les leviers 30 et 40, on utilise une interface isostatique située dans le plan de la fibre neutre FNE de la région centrale 10 de la pièce P.

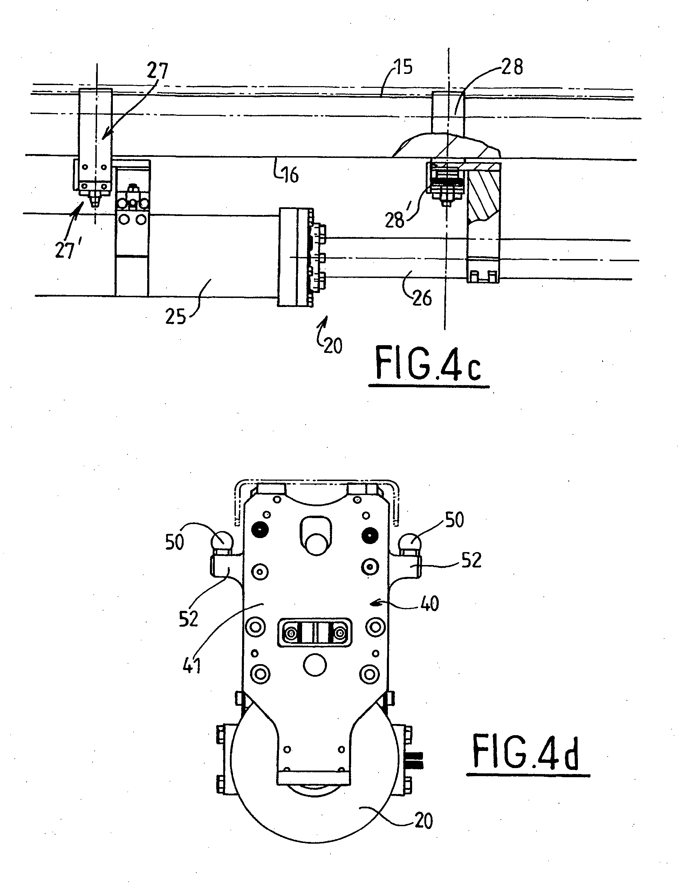

Elle est matérialisée sur les dessins par 3 points d'appui 50 :
- 2 sur un des leviers (par exemple 40, voir figure 4d),
- 1 sur l'autre levier (par exemple 30, voir figure 4a),

Le dispositif représenté sur les dessins permet de supporter l'ensemble dans une position où les prolongements 11 et 12 sont dirigés vers le haut, mais ceci n'est qu'un exemple et la conception se prête également à des prolongements 11 et 12 dirigés vers le bas.

Les contacts matérialisés par ces points d'appui (ou le centre d'appui correspondant qui est le centre de la sphère dans le cas d'une bille sphérique 50) sont situés dans le plan de la fibre neutre FNE de la partie principale 10 de la pièce P, la fibre neutre FNE passant au milieu de la région 10.

Dans le cas préféré on place donc 2 billes 50 sur des bras latéraux 52 d'un des leviers par exemple 40 (figure 4d). Un trou 51 permettant de s'interfacer avec une autre bille 50 est ménagé sur l'autre levier par exemple 30 (figure 4a).

La position du centre 0 de ces billes 50 le long de la longueur de la région 10 passe avantageusement par un plan ZZ' perpendiculaire à la longueur et passant au niveau des points d'appui 21 et 22 de l'actuateur 20 sur les leviers 30 et 40, ce qui permet d'éviter que la masse de l'actuateur n'introduise un moment dans les leviers 30 et 40 et donc une variation de la courbure.

De façon à limiter la déformation due à la gravité, des compensations par appuis (ou des retenues suivant l'orientation de la pièce) peuvent être fixées entre l'actuateur 20 et la pièce P et sont réglées pour minimiser la flèche de la pièce due à la gravité. Un exemple d'application consiste à utiliser des ressorts pour effectuer cette fonction, comme représenté aux figures 2 et 4c sur lesquelles on voit des.compensateurs 27, 28 et 29 entre la partie centrale 10 de la pièce P et le corps 25 ou la tige 26 du vérin 20, avec des ressorts de compensation 27', 28' et 29'.

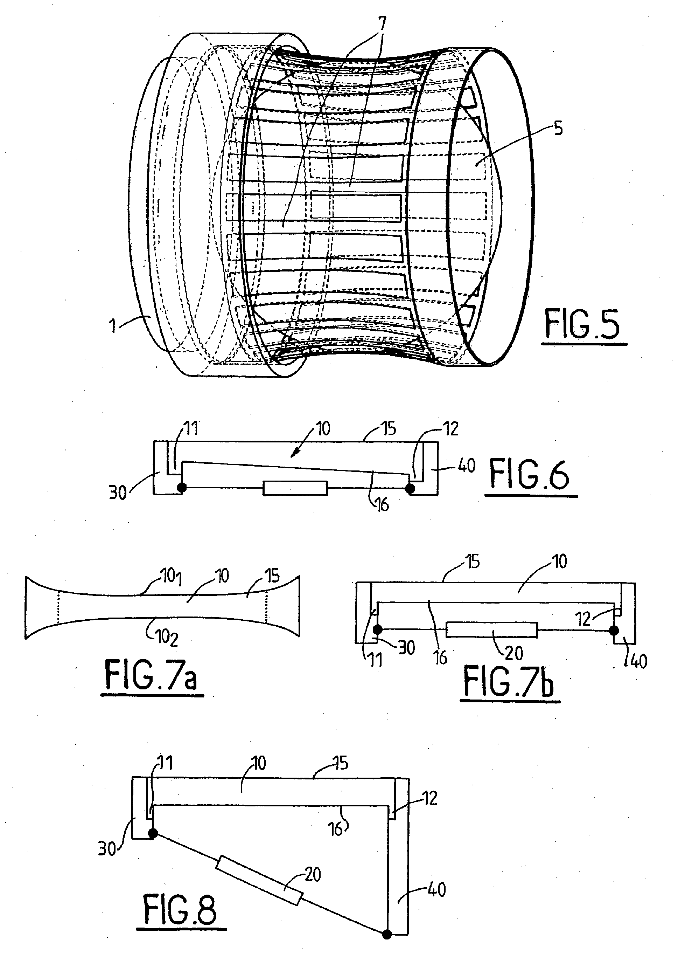

Dans une variante de l'invention (figure 6), l'épaisseur de la région 10 peut être variable avec un loi qui permet, lorsqu'on applique les moments, de donner une forme autre qu'une forme à profil cylindrique symétrique par rapport au milieu de la longueur du miroir : forme de section elliptique, parabolique ou polynomiale sans axe de symétrie.

Dans une autre variante de l'invention (figures 7a et 7b), l'effet précédent est obtenu en modifiant la largeur de la pièce (figure 7a) le long de sa longueur (parallélépipède curviligne), avec une loi de type linéaire ou possédant des termes polynomiaux d'ordre supérieures. On conserve, dans ce cas, une symétrie des deux profils latéraux 10₁ et 10₂ par rapport à la longueur du miroir.

Dans une autre variante de l'invention, l'effet précédent est obtenu en modifiant la longueur des leviers 30 et 40 (figure 8).

Toute combinaison de ces variantes est aussi possible.

## Revendications

1. Système déformable pour un miroir comportant une pièce (P) de forme générale parallélépipédique couplée à un actionneur permettant de la déformer en générant une courbure suivant la longueur, dans lequel ladite pièce (P) présente une partie principale (10) à déformer, qui porte à ses extrémités des excroissances (11, 12) telles que la pièce (P) présente en coupe longitudinale une forme de U allongé et dans lequel l'actionneur présente des éléments d'appui (30, 40) dont chacun présente au moins un appui sur lesdites excroissances (11, 12) pour leur transmettre un effort de manière à produire une déformation de la pièce (P), **caractérisé en ce que** les éléments d'appui (30, 40) sont des leviers et **en ce qu'**au moins un dedits leviers présente un premier appui (B1, B2) disposé dans une partie extérieure de la partie principale (10) de la pièce (P), un deuxième appui (A1, A2) espacé du premier appui en direction d'une extrémité libre (13, 14) de ladite excroissance (11, 12) et disposé dans une partie intérieure (11', 12') de ladite excroissance (11, 12).

2. Système selon la revendication 1, **caractérisé en ce que** chaque levier (30, 40) présente au moins un desdits appuis (B1, B2; A1, A2) constitué par au moins une pièce plane rigide, ladite pièce plane (1) coopérant avec au moins une bille (5) transmettant l'effort à appliquer.

3. Système selon la revendication 2, **caractérisé en ce qu'**au moins une bille (5) est centrée par des lames ressort (7) réparties sur son pourtour.

4. Système selon l'une des revendications 1 à 3, **caractérisé en ce que** le premier appui jouxte la face (15) de la partie principale (10) de la pièce (P) qui est opposée auxdites excroissances (11, 12).

5. Système selon une des revendications précédentes, **caractérisé en ce que** le premier (B1, B2) et/ou le deuxième (A1, A2) appui comporte deux dites pièces planes rigides (1).

6. Système selon la revendication 5, **caractérisé en ce que** le premier (B1, B2) et/ou le deuxième (A1, A2) appui comporte une rotule (6) venant coiffer lesdites deux pièces planes rigides (1).

7. Système selon une des revendications précédentes, **caractérisé en ce qu'**il présente une interface de support isostatique située dans le plan de la fibre neutre (FNE) de la région centrale de la partie principale (10) de la pièce (P).

## Patentansprüche

1. Verformbare Vorrichtung für einen Spiegel mit einem Bauteil (P) mit einer im Allgemeinen parallelepipedischen Form, das mit einer Betätigungseinrichtung gekoppelt ist, die seine Verformung gestattet, indem eine Krümmung über die Länge erzeugt wird, bei der das Bauteil (P) ein zu verformendes Hauptbauteil (10) aufweist, das an seinen Endabschnitten Wülste (11, 12) dergestalt aufweist, dass das Bauteil (P) im Längsschnitt die Form eines langgezogenen U aufweist, und bei der die Betätigungseinrichtung Stützeelemente (30, 40) aufweist, von denen jedes zumindest eine Stütze an den Wülsten (11, 12) aufweist, um an diese eine Kraft in der Weise zu übertragen, dass eine Verformung des Bauteils (P) erzeugt wird, **dadurch gekennzeichnet, dass** die Stützelemente (30, 40) Hebel sind und dass zumindest einer der Hebel eine erste Stütze (B1, B2), die sich in einem äußeren Teil das Hauptbauteils (10) des Bauteils (P) befindet, und eine zweite Stütze (A1, A2) aufweist, die von der ersten Stütze in Richtung eines freien Endabschnitts (13, 14) der Wulst (11, 12) beabstandet ist und die sich in einem inneren Teil (11',12') der Wulst (11,12) befindet.

2. Vorrichtung nach Anspruch 1, **dadurch gekennzeichnet, dass** jeder Hebel (30, 40) zumindest eine der Stützen (B1, B2; A1, A2) aufweist, die durch zumindest ein ebenes, starres Bauteil gebildet ist, wobei das ebene Bauteil (1) mit zumindest einer Kugel (5) zusammenwirkt, die die aufzubringende Kraft überträgt.

3. Vorrichtung nach Anspruch 2, **dadurch gekennzeichnet, dass** zumindest eine Kugel (5) durch Federblätter (7) zentriert ist, die über ihren Umfang verteilt sind.

4. Vorrichtung nach einem der Ansprüche 1 bis 3, **dadurch gekennzeichnet, dass** die erste Stütze benachbart zur Fläche (15) des Hauptbauteils (10) des Bauteils (9) ist, die zu den Wülsten (11, 22) entgegengesetzt ist.

5. Vorrichtung nach einem der vorhergehenden Ansprüche, **dadurch gekennzeichnet, dass** die erste Stütze (B1, B2) und/oder die zweite Stütze (A1, A2) zwei ebene, starre Bauteile (1) aufweisen/aufweist.

6. Vorrichtung nach Anspruch 5, **dadurch gekennzeichnet, dass** die erste Stütze (B1, B2) und/oder die zweite Stütze (A1, A2) ein Kugelgelenk (6) aufweisen/aufweist, durch das die zwei ebenen, starren Bauteile (1) bedeckt sind.

7. Vorrichtung nach einem der vorhergehenden Ansprüche, **dadurch gekennzeichnet, dass** diese eine isostatische Abstützverbindungsstelle aufweist, die sich in der Ebene der neutralen Achse (FNE) des mittleren Bereiches des Hauptbauteils (10) des Bauteils (P) befindet.

## Claims

1. A deformable system for a mirror comprising a part (P) generally in the shape of a rectangular block coupled to an actuator enabling the part to be deformed by generating curvature in its long direction, in which system said part (P) presents a main portion (10) to be deformed, the main portion carrying projections (11, 12) at its ends such that, in longitudinal section, the part (P) presents an elongate U-shape, and in which the actuator presents bearing elements (30, 40) each presenting at least one bearing point for acting on said projections (11, 12) in order to transmit a force thereto in such a manner as to deform the part (P), the system being **characterized in that** the bearing elements (30, 40) are levers and **in that** at least one of said levers presents a first bearing point (B1, B2) disposed in an outside portion of the main portion (10) of the part (P), and a second bearing point (A1, A2) spaced apart from the first bearing point towards a free end (13, 14) of said projection (11, 12) and disposed on an inside portion (11', 12') of said projection (11, 12).

2. A system according to claim 1, **characterized in that** each lever (30, 40) presents at least one of said bearing points (B1, B2; A1, A2) constituted by at least one rigid plane part, said plane part (1) co-operating with at least one ball (5) for transmitting the force that is to be applied.

3. A system according to claim 2, **characterized in that** at least one ball (5) is centered by spring blades (7) distributed around its periphery.

4. A system according to any one of claims 1 to 3, **characterized in that** the first bearing point is adjacent to the face (15) of the main portion (10) of the part (P) that is opposite from said projections (11, 12).

5. A system according to any preceding claim, **characterized in that** the first and/or second bearing point (B1, B2; A1, A2) comprises two of said rigid plane parts (1).

6. A system according to claim 5, **characterized in that** the first and/or second bearing point (B1, B2; A1, A2) comprises a rocker (6) covering said two rigid plane parts (1).

7. A system according to any preceding claim, **characterized in that** it presents an isostatic support interface situated in the plane of the neutral fiber (FNE) of the central region of the main portion (10) of the part (P).
